# EUROPÄISCHE PATENTSCHRIFT

(11) **EP 0 413 112 B1**
(45) Veröffentlichungstag und Bekanntmachung des Hinweises auf die Patenterteilung: **08.12.1993**
(21) Anmeldenummer: 90111995.8
(22) Anmeldetag: 25.06.1990
(51) Int. Cl.: F16D 65/54, F16D 65/74, F16D 65/16

(54) **Hydraulikzylinder für Bremseinrichtungen von Fahrzeugen**
Vehicle brake hydraulic cylinder
Cylindre hydraulique pour dispositifs de freinage de véhicules

(30) Priorität: 19.07.1989 DE 3923943
(43) Veröffentlichungstag der Anmeldung: 20.02.1991
(73) Patentinhaber: KNORR-BREMSE AG, 80710 München (DE)
(72) Erfinder: Wirth, Xaver, Dr., D-8045 Ismaning (DE)

(56) Entgegenhaltungen:
- DE-A- 2 152 239
- DE-C- 3 531 896
- FR-A- 1 586 767
- GB-A- 1 246 729
- GB-A- 2 080 453
- US-A- 3 011 315
- US-A- 4 030 576
- US-A- 4 068 746

## Beschreibung

Die Erfindung betrifft einen Hydraulikzylinder nach dem Gattungsbegriff des Patentanspruches 1.

Durch Druckmittel betätigbare Bremsanlagen, z.B. Scheibenbremsanlagen für Schienen- und Nutzfahrzeuge, weisen in ihrer Ausgestaltung als Bremssattelkonstruktionen einen in einem Gehäuse bzw. im Bremssattelaufbau druckdicht gefuhrten und durch hydraulisches Druckmittel beaufschlagbaren Kolben auf, welcher bei Betätigung gegenübr einer einen Bremsbelag tragenden Bremsbacke wirkt, um diese an eine abzubremsende Bremsscheibe anzudrücken.

Gattungsgemäße Hydraulikzylinder dieser Wirkungsweise (US-A-4 068 746) können auch in sog. Bremszangenkonstruktionen, vorzugsweise für Schienenfahrzeuge, verwendet werden, um die Arme einer Bremszange beidseitig an eine abzubremsende Bremsscheibe anzupressen. Die dem Zuspannkolben dieser Hydraulikzylinder zugeordnete Nachstelleinrichtung ist von hydraulischer Wirkungsweise, wobei in rückwärtiger Erstreckung des Zuspannkolbens ein ein Nachstellventil aufweisender Hilfskolben vorgesehen ist; das bei Bremsbetätigung zur Wirkung gelangende Nachstellventil öffnet bei Erreichen eines vorbestimmten Druckes, derart, daß in das an den Zuspannkolben angekoppelte Hydraulikvolumen zum Zwecke der Nachstellung Hydraulikmedium einspeisbar ist. Nach Maßgabe dieser hydraulischen Einspeisung fährt der Hilfskolben dem Zuspannkolben in Betätigungsrichtung nach, wodurch die Ausgangslage des Zuspannkolbens nach Maßgabe des Bremsbelagverschleißes nachgestellt wird.

Das Nachstellventil arbeitet druckabhängig, d.h. es öffnet gegen Federkraft bei einem vorbestimmten Druck und schließt unterhalb dises Druckes, wenn der Nachstellvorgang beendet ist. Das Nachstellventil kann infolge der vorbeschriebenen Wirkungsweise auch dann öffnen, wenn unerwünschte Druckstöße im hydraulischen System vorliegen, ohne daß ein Bremsbelag-Verschleiß nachgestellt werden müßte. Andererseits ist es selbst bei einer Nachstellung des Verschleißes möglich, daß nur eine sehr geringfügige Druckerhöhung für das Nachfahren des Zuspannkolbens benötigt wird. Dies kann dazu führen, daß das Nachstellventil trotz Verschleiß nicht öffnet und ein Nachfahren des Hilfskolbens in Richtung des Zuspannkolbens unterbleibt. Probleme dieser Art, welche durch die druckabhängige Nachstellung verursacht sind, können entweder zu einem vorzeitigen Verschleiß der Bremsbeläge oder zu unzureichender Bremsleistung führen.

Davon ausgehend besteht die Aufgabe der Erfindung darin, einen Hydraulikzylinder der gattungsgemäßen Art so auszugestalten, daß trotz Ankopplung eines Hydraulikvolumens, welcher in Ruhelage des Zuspannkolbens auf diesen einwirkende Stoßkräfte auffängt, eine funktionssichere Nachstellung ermöglicht ist. Die Nachstelleinrichtung soll auch bei Druckschwankungen im hydraulischen System absolut sicher wirken. Zugleich soll sie von einfachem Aufbau sein.

Zur Lösung dieser Aufgabe dienen die Merkmale nach dem Kennzeichnungsteil des Patentanspruches 1.

Der Hydraulikzylinder vereint die Vorteile der in Ruhelage des Zuspannkolbens erfolgenden Ankoppelung des Hydraulikvolumen mit einer wegabhängigen Nachstelleinrichtung. Durch das Zusammenwirken zwischen dem Zuspannkolben, dem von diesem zusammendrückbaren Paket von Tellerfedern und dem Reibschluß zwischen dem die Tellerfedern tragenden Hilfskolben und der am Außenumfang des Hilfskolbens wirkenden Klemmfeder ist sichergestellt, daß die Nachstellung unabhängig vom Druck im hydraulischen System dann erfolgt, wenn der verfügbare Weg der Tellerfedern aufgebraucht und die Mitnahme, d.h. das Nachfahren des Hilfskolbens eingeleitet ist.

Obwohl das an den Zuspannkolben ankoppelbare hydraulische Volumen normalerweise in Ruhelage des Zuspannkolbens aktiv ist, kann es ohne weiteres durch Druckentlastung, d.h. durch Öffnen einer Dichtschraube mit dem eigentlichen Arbeitsvolumen im Druckraum des Hydraulikzylinders verbunden werden, um z.B. bei aktiv zurückgeschobenem Zuspannkolben ein Austauschen der Bremsbeläge am Bremsbelagträger bzw. an den Bremsbelagträgern vorzunehmen.

Vorteilhafte Ausgestaltungen und Weiterbildungen sind in weiteren Patentansprüchen aufgeführt.

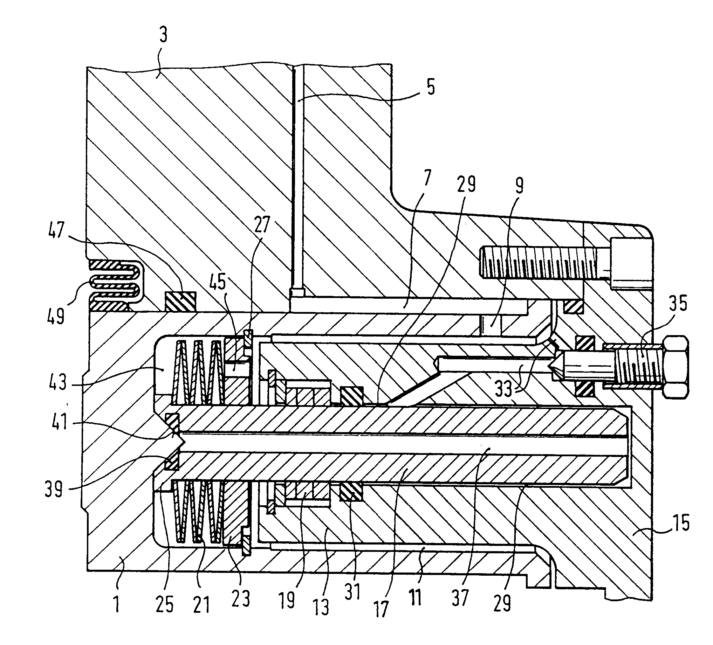

Die Erfindung ist nachfolgend anhand eines Ausführungsbeispiels unter Bezugnahme auf die beigefügte Zeichnung erläutert. Die Zeichnung gibt in Teilschnittansicht den Hydraulikzylinder nach der Erfindung wieder.

In der Zeichnung ist ein Hydraulikzylinder mit einem Zuspannkolben 1 dargestellt, welcher in einem Gehäuse 3 axial verschieblich geführt ist. Das Gehäuse 3 ist z.B. Bestandteil eines schwimmend geführten Bremssattels oder einer Bremszangenanordnung. Der Zuspannkolben 1 ist hydraulisch betätigbar, wobei hydraulisches Arbeitsmedium durch die Bohrung 5 in die Ringkammer 7, von dieser in die Bohrung 9 und in den Druckraum 11 gelangt und auf den Zuspannkolben 1 im Sinne eines gemäß Zeichnung nach links gerichteten Arbeitshubes einzuwirken vermag. Bei Betätigung wirkt der Zuspannkolben auf einen (nicht dargestellten) Bremsbelagträger ein, welcher z.B. an eine Bremsscheibe anpreßbar ist.

Der Zuspannkolben 1 ist im wesentlichen hohlzylindrisch ausgebildet und enthält in seinem Inneren einen axialen Fortsatz 13 eines mit dem Gehäuse 3 verschraubten Deckels 15, wobei im Fortsatz ein Hilfskolben 17, axial sich erstreckend, geführt ist. Eine am Innenumfang des Fortsatzes 13 befindliche Klemmfeder 19, welche als Schlingfeder ausgebildet sein kann, sitzt unter Reibschluß auf dem Außenumfang des Hilfskolbens 17. Am gemäß Darstellung linken Ende sind am Außenumfang des Hilfskolbens 17 mehrere Tellerfedern 21 in Form eines Federpakets geführt. Hierbei ist der im Gehäuse 3 geführte Zuspannkolben 1 mit Hilfe der Tellerfedern 21 und der die Tellerfedern rechtsseitig abstützenden Scheibe 23 axial vorgespannt, da sich die Tellerfedern an ihrem linken Ende gegenüber einem Bund 25 des Hilfskolbens 17 abstützen und die Scheibe 23 von einem Sicherungsring 27 axial gehalten ist. Der Hilfskolben 17 ist in seinem Inneren hohl, d.h. es besteht am rechten Ende freie Verbindung zu der zwischen dem Hilfskolben (17) und dem Fortsatz (13) gebildeten Kammer 29, welche gegenüber der Klemmfeder 19 durch eine Dichtung 31 abgedichtet ist. Die Kammer 29 kann mittels eines Kanals 33 mit dem den Fortsatz 13 umgebenden, ringförmigen Druckraum 11 in Verbindung stehen, wenn eine in den Kanal 33 sich erstreckende Dichtschraube 35 aus der in der Zeichnung dargestellten Verschlußlage in eine geöffnete Position zurückgeschraubt ist.

Die im Inneren des Hilfskolbens 17 axial verlaufende Bohrung 37 ist an ihrem gemäß Darstellung linken Ende von einer Dichtung 39 umgeben, wobei sich die Dichtung 39 in der dargestellten Position des Hlfskolbens 17 abdichtend an einen Kegel 41 anlegt, welcher einstückig vom Zuspannkolben 1 nach rechts gerichtet sich erstreckt. Hebt der Hilfskolben 17 von der dargestellten Dichtlage relativ zum Zuspannkolben 1 von diesem ab, dann ist folglich eine freie Verbindung zwischen dem Inneren des Hilfskolben und dem die Tellerfedern 21 aufnehmenden Raum 43 hergestellt. Der Raum 43 steht in freier Verbindung mit dem Druckraum 11, er ist also Bestandteil desselben. Vorzugsweise ist die Scheibe 23 wenigstens von einer axialen Bohrung 45 durchsetzt, um einen freien Austausch des hydraulischen Arbeitsmediums zwischen den Raum 43 und dem Druckraum 11 zu ermöglichen.

Im dargestellten Ausführungsbeispiel ist der Zuspannkolben 1 mittels einer Dichtung 47 gegenüber der Innenwand des Gehäuses 3 abgedichtet, wobei ein Faltenbalg 49 das Eindringen von Schmutzteilchen in den Ringspalt zwischen Zuspannkolben 1 und Gehäuse 3 verhindert.

Die Wirkungsweise der vorstehend erläuterten Kolbenrückschlagsperre von hydraulischer Wirkungsweise ist wie folgt :

Um mit Hilfe des Hydraulikzylinders die (nicht dargestellte) Bremse zu betätigen, wird hydraulisches Arbeitsmedium in die Bohrung 5 mit vorbestimmtem Druck eingeleitet. Nach Anlegen des hydraulischen Betriebsdruckes p1 fährt der Zuspannkolben 1 solange aus, bis die Zuspannkraft am (nicht dargestellten) Bremsbelag aufgebaut ist. Beim Ausfahren des Zuspannkolbens 1 bewegt sich dieser relativ zum Hilfskolben 17, da letztere mit Hilfe der Klemmfeder 19 gegenüber dem Fortsatz 13 des Deckels 15 reibschlüssig gehalten ist. Folglich werden die Tellerfedern 21 zwischen dem Bund 25 und dem Sicherungsring 27 bzw. der Scheibe 23 vorgespannt. Der Kegel 41 hebt sich von der Dichtung 39 ab, so daß freie Verbindung zwischen dem Inneren des Hilfskolbens, dem Raum 43 und dem Druckraum 11 besteht. Ist der vom Zuspannkolben 1 zurückgelegte Kolbenweg kleiner als der verfügbare Weg der Tellerfedern, dann hält die Klemmfeder 19 über Reibschluß den Hilfskolben gehäusefest. Wie vorstehend erläutert ist, hat in dieser Kolbenposition der Kegel 41 von der Richtung 39 abgehoben, d.h. alle Innenkammern des Systems stehen somit unter dem Betriebsdruck p1.

Wird der Betriebsdruck abgebaut, nähert er sich also dem Wert 0, dann wird der Zuspannkolben 1 entsprechend dem Tellerfederweg wieder eingerückt. Die Kontaktfläche im Bereich zwischen dem Kegel 41 und der Dichtung 39 wird wieder geschlossen.

Ist der Ausfahrweg des Zuspannkolbens 1 jedoch größer als der größtmögliche Federweg der Tellerfedern 21, so wird unter Wirkung der hydraulischen Kolbenkraft der Hilfskolben 17 nach Überwindung der Reibkraft der Klemmfeder 19 aus dem gehäusefesten Fortsatz 13 herausgezogen. Wird die Bremse gelöst, wird also der Betriebsdruck wieder abgebaut, dann fährt der Zuspannkolben nunmehr dem Federweg der Tellerfeder entsprechend ein; der Zuspannkolben hat also nachgestellt. Auch nach diesem Rückhub ist die Dicht- bzw. Kontaktfläche zwischen dem Kegel 41 und der Dichtung 39 wieder geschlossen.

Bei geschlossener Dicht- bzw. Kontaktfläche zwischen Kegel 41 und Dichtung 39 sind die Bohrung 37, die Kammer 29 und der Kanal 33 gegenüber dem Druckraum 11 und der Bohrung 5 verschlossen. Eine von außen auf die Stirnfläche des Zuspannkolbens gerichtete Stoßkraft führt, auch wenn diese größer als die Klemmfederreibkraft sein sollte, nicht zum "Einfahren" des Zuspannkolbens in das Gehäuse 3, da die Fluidmenge hinter der Dichtung 39 nicht abfließen kann und folglich als Druckpolster wirkt. Es liegt somit eine hydraulische Rückschlagsperre des Zuspannkolbens vor.

Zum Belagtausch muß der Zuspannkolben von seiner Stirnseite her mittels eines Werkzeuges (Hebel, Schraubzwinge o.ä.) zurückgedrückt werden. Zu diesem Zweck wird die normalerweise in geschlossener Position befindliche Dichtschraube 35 zurückgedreht also geöffnet. Das das Rückwandern des Zuspannkolbens verhindernde Hydraulikvolumen kann in der Folge durch den Kanal 33 und die Bohrung 5 ungehindert in den Hydrauliktank zurückfließen. Nach erfolgtem Austausch des Bremsbelages bzw. der Bremsbeläge der vom Zuspannkolben betätigbaren Bremseinrichtung wird die Dichtschraube 35 wieder geschlossen, d.h. daß die Rückschlagsperre wieder aktiviert ist.

### Bezugszeichenliste

- 1: Zuspannkolben
- 3: Gehäuse
- 5: Bohrung
- 7: Ringkammer
- 9: Bohrung
- 11: Druckraum
- 13: Fortsatz
- 15: Deckel
- 17: Hilfskolben
- 19: Klemmfeder
- 21: Tellerfeder
- 23: Scheibe
- 25: Bund
- 27: Sicherungsring
- 29: Kammer
- 31: Dichtung
- 33: Kanal
- 35: Dichtschraube
- 37: Bohrung
- 39: Dichtung
- 41: Kegel
- 43: Raum
- 45: Bohrung
- 47: Dichtung
- 49: Faltenbalg

## Patentansprüche

1. Hydraulikzylinder, für Bremseinrichtungen von Fahrzeugen, mit einem in einem Zylindergehäuse (3) hydraulisch beaufschlagbaren Zuspannkolben (1), welcher bei Betätigung gegenüber einem einen Bremsbelag aufweisenden Bremsbelagträger zu wirken vermag, wobei dem Zuspannkolben (1) eine Nachstelleinrichtung zugeordnet ist und eine Rückschlagsperre das Einfahren des Zuspannkolbens (1) infolge axial gerichteter Stoßkräfte verhindert und wobei in Ruhelage des Zuspannkolbens (1) an diesen ein Hydraulikvolumen angekoppelt ist, welches auf den Zuspannkolben (1) einwirkende Stoßkräfte auffängt, gekennzeichnet durch folgende Merkmale:
a) der Zuspannkolben (1) weist in seinem Inneren eine axial verlaufende, rückseitig offene und gegenüber der Stirnseite geschlossene Ausnehmung auf, in welche sich rückseitig ein gehäusefester Fortsatz (13) erstreckt;
b) innerhalb des Fortsatzes (13) verläuft axial gerichtet eine Kammer (29), in welcher ein Hilfskolben (17) geführt ist, wobei der Hilfskolben (17) an seinem Außenumfang reibschlüssig an einer am Innenumfang der Kammer (29) eingesetzten Klemmfeder (19) gehalten ist;
c) der Hilfskolben (17) ist durchgehend mit einer beidseitig offenen, axialen Bohrung (37) versehen, wobei das in Richtung des stirnseitigen Endes des Zuspannkolbens (1) gerichtete Ende des Hilfskolbens (17) eine die Bohrung (37) umgebende Dichtung (39) trägt, welche in Ruhelage des Zuspannkolbens (1) an einem Dichtsitz (Kegel 41) desselben dichtend anliegt, derart, daß die Bohrung (37) des Hilfskolbens (17) gegenüber dem stirnseitigen inneren Ende des Zuspannkolbens abgedichtet ist;
d) die Bohrung (37) steht am rückwärtigen Ende des Hilfskolbens (17) in offener Verbindung mit der Kammer (29);
e) der Zuspannkolben (1) ist mittels eines Pakets von Tellerfedern (21) gegenüber dem Hilfskolben (17) federnd vorgespannt, derart, daß sich der Zuspannkolben bei hydraulischer Beaufschlagung desselben entsprechend dem Federweg der Tellerfedern (21) aus dem Gehäuse (3) des Hydraulikzylinders ausfahren läßt, bis der Hilfskolben (17) im Falle zusätzlichen Betätigungsweges durch das Paket der Tellerfedern (21) gegen den Reibschluß der Klemmfeder (19) mitgenmmen wird; und
f) der Druckraum (11) für den Zuspannkolben (1) steht in freier Verbindung mit dem die Tellerfedern (21) aufnehmenden Raum (43) am vorderseitigen Ende des Hilfskolbens (17), derart, daß bei Druckbeaufschlagung des Zuspannkolbens (1) und Öffnen der Dichtung (39) freie Verbindung zwischen dem Druckraum (11) und der Bohrung (37) des Hilfskolbens (17) besteht.

2. Hydraulikzylinder nach Anspruch 1, dadurch gekennzeichnet, daß das Paket von Tellerfedern (21) am Außenumfang des Hilfskolbens (17) geführt und einerseits an einem Bund (25) des Hilfskolbens und andererseits an einem Sicherungsring (27) am Innenumfang des Druckraums (11) abgestützt ist.

3. Hydraulikzylinder nach Anspruch 1 oder 2, dadurch gekennzeichnet, daß die den Hilfskolben (17) innerhalb des Fortsatzes (13) umgebende Kammer (29) mittels eines Kanals (33) und einer zwischen geöffneter und geschlossener Position verschraubbaren Dichtschraube (35) mit dem Druckraum (11) verbindbar ist, derart, daß das die Rückschlagsperre bildende hydraulische Volumen in der Kammer (29) und in der Bohrung (37) zum Zwecke des Bremsbelagwechsels entlastbar ist.

4. Hydraulikzylinder nach Anspruch 3, dadurch gekennzeichnet, daß die Dichtschraube (35) gegenüber dem Querschnitt des Kanals (33) zwischen geöffneter und geschlossener Lage verschraubbar ist.

## Claims

1. A hydraulic cylinder, for vehicle brake equipment, having a biassing piston (1) which can be acted upon hydraulically in a cylinder housing (3) and which when actuated is effective with respect to a brake lining carrier having a brake lining, wherein an adjustment arrangement is associated with the biassing piston (1) and a recoil block prevents retraction of the biassing piston (1) as a result of axially directed impact forces, and wherein in the rest disposition of the biassing piston (1) a hydraulic volume is coupled thereto which takes up impact forces acting on the biassing piston (1), characterised by the following features:
(a) the biassing piston (1) has internally an axial, rearwardly open and forwardly closed recess into which there reaches from the rear a housing-mounted extension (13);
(b) a chamber (29) extends axially within the extension (13), an auxiliary piston (17) being guided in the chamber, the outer periphery of the auxiliary piston (17) being held in frictional contact against a clamping spring (19) set on the internal periphery of the chamber (29);
(c) the auxiliary piston (17) is provided with an axial bore (37), open at both ends and extending through the piston, the auxiliary piston (17) carrying at its end directed towards the forward end of the biassing piston (1) a seal (39) extending around the bore (37), which seal bears sealingly against a seal seat (cone 41) of the biassing piston in the rest position of the biassing piston (17), in such a manner that the bore (37) of the auxiliary piston (17) is sealed off with respect to the forward internal end of the biassing piston;
(d) the bore (37) is in open connection with the chamber (29) at the rearward end of the auxiliary piston (17);
(e) the biassing piston (1) is spring pre-biassed with respect to the auxiliary piston (17) by means of a pack of plate springs (21), in such a manner that when acted upon hydraulically the biassing piston can emerge from the housing (3) of the hydraulic cylinder correspondingly to the spring travel of the plate springs (21), until the auxiliary piston (17), in the event of further travel, is carried along by the pack of plate springs (21) against the frictional contact of the clamping spring (19); and
(f) the pressure space (11) for the biassing piston (1) is in -open connection with the space (43) accommodating the plate springs (21) at the forward end of the auxiliary piston (17) in such a manner that when the biassing piston (1) is acted upon by pressure and the seal (39) opens, there is an open connection between the pressure space (11) and the bore (37) of the auxiliary piston (17).

2. A hydraulic cylinder according to claim 1, characterised in that the pack of plate springs (21) is guided on the outer periphery of the auxiliary piston (17) and bears against, on the one hand, a collar (25) of the auxiliary piston and, on the other hand, a securing ring (27) on the inner periphery of the pressure space (11).

3. A hydraulic cylinder according to claims 1 or 2, characterised in that the chamber (29) surrounding the auxiliary piston (17) within the extension (13) can be connected with the pressure space (11) by means of a channel (33) and a sealing screw (35) which can be turned between open and closed dispositions, in such a manner that the hydraulic volume in the chamber (29) and in the bore (37), forming the recoil block, can be relieved for the purpose of changing the brake lining.

4. A hydraulic cylinder according to claim 3, characterised in that the sealing screw (35) can be turned relative to the cross section of the channel (33), between opened and closed dispositions.

## Revendications

1. Cylindre hydraulique pour dispositif de frein de vehicule, comprenant un piston (1) d'application, qui peut être chargé hydrauliquement dans un corps (3) de cylindre et qui, lors de l'actionnement, peut agir sur un porte-garniture de frein comportant une garniture de frein, un dispositif de réglage étant associé au piston (1) d'application et un clapet antiretour empêchant l'introduction du piston (1) d'application à la suite de forces de choc axiales et, en la position de repos du piston (1) d'application, est accouplé à celui-ci un volume hydraulique qui absorbe les forces de choc agissant sur le piston (1) d'application, remarquable par les caractéristiques suivantes :
a) le piston (1) d'application comporte, à l'intérieur, une cavité s'étendant axialement, ouverte vers l'arrière et fermée du cote frontal, dans laquelle s'étend vers l'arrière un prolongement (13) solidaire du corps;
b) à l'intérieur du prolongement (13) s'étend, en étant dirigée axialement, une chambre (29), dans laquelle passe un piston (17) auxiliaire, le piston (17) auxiliaire étant maintenu sur son pourtour extérieur par frottement sur un ressort de friction (19) monté sur le pourtour intérieur de la chambre (29),
c) le piston (17) auxiliaire est muni, tout du long, d'un alésage (37) axial ouvert des deux côtés, l'extrémité du piston (17) auxiliaire, qui est dirigée dans la direction de l'extrémité frontale du piston (1) d'application portant une garniture d'étanchéité (39) entourant l'alésage (37) et s'appliquant de manière étanche, en la position de repos du piston (1) d'application, à un siège (cône 41) de celui-ci, de façon que l'alésage (37) du piston (17) auxiliaire soit rendu étanche par rapport à l'extrémité intérieure et se trouvant du côté frontal du piston d'application;
d) l'alésage (37) communique, à l'extrémité arrière du piston (17) auxiliaire, avec la chambre (29) ;
e) le piston (1) d'application est précontraint élastiquement par rapport au piston (17) auxiliaire au moyen d'un paquet de ressorts à disques (21), de façon que le piston d'application, lorsqu'il est chargé hydrauliquement, puisse sortir, conformément au trajet des ressorts à disques (21), du corps (3) du cylindre hydraulique jusqu' à ce que le piston (17) auxiliaire soit, dans le cas d'un trajet d'actionnement supplémentaire, entraîne par le paquet de ressorts à disques (21) à l'encontre de la liaison par frottement du ressort de friction (19);
f) la chambre de pression (11) du piston (1) d'application communique librement avec la chambre (43) recevant les ressorts à disques (21) à l'extrémité avant du piston (17) auxiliaire de façon à ménager, lorsque le piston (1) d'application est soumis à la pression et lorsque la garniture (39) d'étanchéité est ouverte, une communication libre entre la chambre (11) de pression et l'alésage (37) du piston (17) auxiliaire.

2. Vérin hydraulique suivant la revendication 1, caractérisé en ce que le paquet de ressorts à disques (21) est guidé sur le pourtour extérieur du piston (17) auxiliaire et s'appuie d'une part, sur un collet (25) du piston auxiliaire et d'autre part, sur un jonc (27) sur le pourtour intérieur de la chambre (11) de pression.

3. Vérin hydraulique suivant la revendication 1 ou 2, caractérisé en ce que la chambre (29) entourant le piston (17) auxiliaire dans le prolongement (23) peut communiquer avec la chambre (11) de pression au moyen d'un canal (33) et d'une vis (35) d'étanchéité pouvant se visser entre une position ouverte et une position fermée de façon que le volume hydraulique formant le clapet antiretour puisse être dechargé dans la chambre (29) et dans l'alesage (37) en vue de changer la garniture de frein.

4. vérin hydraulique suivant la revendication 3, caractérisé en ce que la vis (35) d'étanchéité peut être vissée par rapport à la section transversale du canal (33) entre une position ouverte et une position fermée.
